# EUROPEAN PATENT SPECIFICATION

(11) **EP 3 226 128 B1**
(45) Date of publication and mention of the grant of the patent: **09.02.2022**
(21) Application number: 17159233.0
(22) Date of filing: 03.03.2017
(51) Int. Cl.: G06Q 20/22, G06Q 20/40, G06F 21/57, G06F 21/62, H04W 12/06, H04W 12/082

(54) **METHOD AND DEVICE FOR ONLINE PAYMENT**
VERFAHREN UND VORRICHTUNG FÜR ONLINE-ZAHLUNG
PROCÉDÉ ET DISPOSITIF DE PAIEMENT EN LIGNE

(30) Priority: 29.03.2016 CN 201610186624
(43) Date of publication of application: 04.10.2017
(73) Proprietor: Beijing Xiaomi Mobile Software Co., Ltd., Beijing 100085 (CN)
(72) Inventor: LIU, Ming, Beijing 100085 (CN); LI, Minghao, Beijing 100085 (CN); WU, Liangxiong, Beijing 100085 (CN)
(74) Representative: Cabinet Beau de Loménie

(56) References cited:
- US-A1- 2014 298 420
- US-A1- 2015 052 616
- US-B1- 8 700 895
- US-B1- 9 058 189
- US-B1- 9 191 388

## Description

### TECHNICAL FIELD

The present disclosure generally relates to network technical field, and more particularly, to a method and devices for online payment, and a non-transitory computer-readable storage medium.

### BACKGROUND

With the continuous development of network technologies, various smart terminals provide more and more services for people via networks, which bring great conveniences to people's daily life. For example, people can use functions such as online payment and money transfer by using mobile terminals as long as the mobile terminals are connected to networks. In this way, people do not need to carry large amounts of cash, and troubles resulted from change (i.e., the money that you receive when you pay for something with more money than it costs because you do not have exactly the right amount of money) can be avoided. Thus, the online payment has become preferred by more and more users.

At present, online payment can be realized as follows. If a smart terminal is currently connected to a network, when the smart terminal detects a trigger operation for triggering a payment option on any application client having the online payment function, the smart terminal obtains the payment data which includes at least account information of the object whom money is paid to and the amount to be paid, and sends the payment data to a server corresponding to the application client; after receiving information indicating successful payment returned from the server, the online payment is completed. The network connected to the smart terminal can be an operator network or a Wireless Fidelity (WiFi) network.

Because various smart terminals reside in relatively complex network environments, for example, unscrupulous individuals usually steal users' personal details using falsified networks when the user's pay online, it is hard to prevent all sorts of potential payment risks during online payment, and this may cause great damages to users' legal benefits.

### SUMMARY

The present disclosure provides a method and devices for online payment, and a non-transitory computer-readable storage medium to overcome the problems existing in related arts. The invention is as defined in the appended independent claims 1, 6, 11 and 12. Further embodiments are as defined in the dependent claims.

According to a first aspect, the invention relates to a method for online payment in a terminal which supports a multiple-account mechanism. In a claimed embodiment, the method comprises: setting one of said accounts as an account to be used only for managing application clients having a payment function, said account being referred to as second system account; setting the second system account as an account enabling a safe payment environment wherein applications running and installed under the second system account are those passing safety verification; and entering the second system account, and performing payment operations under the second system account.

In the claimed embodiment, the method further includes: when detecting an operation for logging out the second system account, removing user application data under the second system account.

In the claimed embodiment, the step of entering the second system account includes: when detecting a payment operation, determining whether a current system account is the second system account; and if the current system account is not the second system account, switching to the second system account.

In the claimed embodiment, the step of performing the payment operations under the second system account includes: monitoring payment activities during the payment; if it is detected that there is data to be transmitted via a network during the payment, determining, by the terminal, whether the to-be-transmitted data is allowed to be transmitted by the network according to a safety verification; if the to-be-transmitted data is allowed to be transmitted by the network according to the safety verification, allowing, by the terminal, the to-be-transmitted data to be transmitted via the network and completing the payment operations; and if the to-be-transmitted data is prohibited from being accessed by the network according to the safety verification, discarding, by the terminal, the to-be-transmitted data.

In the claimed embodiment, the step of determining whether the to-be-transmitted data is allowed to be transmitted by the network according to the safety verification includes: determining whether the to-be-transmitted data comprises a unique identifier (UID) of the application client which is currently running and which is currently performing the payment, where UIDs of all application clients having the payment function and managed by the second system account are listed in a white list, by an IP information packet filtering system; if the to-be-transmitted data includes the UID, determining, by the terminal, that the to-be-transmitted data is allowed to be transmitted by the network according to the safety verification; and if the to-be-transmitted data does not include the UID, determining, by the terminal, that the to-be-transmitted data is prohibited from being accessed by the network according to the safety verification.

In a non-claimed example, the step of entering the second system account includes: receiving a log-in request for logging into the second system account; and logging into the second system account.

In another claimed embodiment, the method further includes: under the second system account, when receiving an installation request for installing an application, verifying whether a signature of the application is consistent with a signature of the application in an authorized application management system; if the signature of the application is consistent with the signature of the application in the authorized application management system, determining that installation of the application passes the safety verification, and installing the application under the second system account in response to the installation request; and if the signature of the application is not consistent with the signature of the application in the authorized application management system, rejecting the installation request.

In still another claimed embodiment, the method further includes: under the second system account, prohibiting all applications under the second system account from reading short messages.

In a non-claimed example, the step of prohibiting all applications under the second system account from reading short messages includes: restricting permissions for all of the applications to read the short messages by a system-provided permission management mechanism.

In still another claimed embodiment, the step of performing payment operations under the second system account includes: under the second system account, transmitting data associated with the payment operations via a data network.

In still another claimed embodiment, the step of transmitting data associated with the payment operations via the data network under the second system account includes: determining whether a currently connected network is the data network; if the currently connected network is the data network, transmitting the data associated with the payment operations via the data network; and if the current connected network is not the data network, displaying notification information to notify a user to connect to the data network, and transmitting the data associated with the payment operations via the data network after detecting that the current network is the data network.

According to a second aspect, the invention relates to a device for online payment. In a claimed embodiment, said device supports a multiple-account mechanism and comprises: a setting module and a processing module (301). The setting module is configured to set one said of accounts as an account to be used only for managing application clients having a payment function, said account being referred to as second system account. The setting module is configured to set the second system account as an account enabling a safe payment environment, wherein applications running and installed under the second system account are those passing safety verification. The processing module (302) is configured to enter the second system account, and perform payment operations under the second system account.

In the claimed embodiment, the device further includes: a removing module configured to, when an operation for logging out the second system account is detected, remove user application data under the second system account.

In the claimed embodiment, the processing module is configured to: when detect a payment operation, determine whether a current system account is the second system account; and if the current system account is not the second system account, switch to the second system account.

In the claimed embodiment, the processing module is further configured to: monitor payment activities during the payment; if it is detected that there is data to be transmitted via a network during the payment, determine whether the to-be-transmitted data is allowed to be transmitted by the network according to a safety verification; if the to-be-transmitted data is allowed to be transmitted by the network according to the safety verification, allow the to-be-transmitted data to be transmitted via the network and complete the payment operations; and if the to-be-transmitted data is prohibited from being accessed by the network according to the safety verification, discard the to-be-transmitted data.

In the claimed embodiment, the processing module is configured to: determine whether the to-be-transmitted data comprises a unique identifier (UID) of the application client which is currently running and which is currently performing the payment, where UIDs of all application clients having the payment function and managed by the second system account are listed in a white list, by an IP information packet filtering system; if the to-be-transmitted data includes the UID, determine that the to-be-transmitted data is allowed to be transmitted by the network according to the safety verification; and if the to-be-transmitted data does not include the UID, determine that the to-be-transmitted data is prohibited from being accessed by the network according to the safety verification.

In another claimed embodiment, the device further includes: a verification module and an installation module.

The verification module is configured to: under the second system account, when an installation request for installing an application is received, verify whether a signature of the application is consistent with a signature of the application in an authorized application management system. The installation module is configured to: if the signature of the application is consistent with the signature of the application in the authorized application management system, determine that installation of the application passes the safety verification, and install the application under the second system account in response to the installation request. If the signature of the application is not consistent with the signature of the application in the authorized application management system, the processing module rejects the installation request.

In a non-claimed example, the processing module is configured to: receive a log-in request for logging into the second system account; and log into the second system account.

In still another claimed embodiment, the device further includes: a permission setting module configured to, under the second system account, prohibit all applications under the second system account from reading short messages.

In a non-claimed example, the permission setting module is configured to restrict permissions for all of the applications to read the short messages by a system-provided permission management mechanism.

In still another claimed embodiment, the processing module is configured to:
under the second system account, transmit data associated with the payment operations via a data network.

In still another claimed embodiment, the processing module is configured to: determine whether a currently connected network is the data network; if the currently connected network is the data network, transmit the data associated with the payment operations via the data network; and if the current connected network is not the data network, display notification information to notify a user to connect to the data network, and transmit the data associated with the payment operations via the data network after detecting that the current network is the data network.

According to a third aspect, the invention relates to a device for online payment. In a claimed embodiment, the device supports a multiple-account mechanism and includes: a processor; and a memory for storing instructions which, when executed by the processor, causes the processor to perform the above-described methods.

In the claimed embodiment, the steps of the above mentioned method are determined by computer program instructions.

Consequently, in a non-claimed example, a computer program for executing the steps of the method as described above when this program is executed by a computer is provided.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by embodiments of the present disclosure can have the following advantageous effects.

In the present disclosure, a second system account which enables a safe payment environment is set, applications running and installed under the second system account are those passing safety verification; the second system account is entered, and payment operations are performed under the second system account. That is, if online payment needs to be performed on a current terminal, the online payment has to be performed under the system managed by the second system account. Because the applications running and installed under the second system account are those passing safety verification, theft of user information by other application clients and thereby property losses to users can be avoided during the online payment. Further, whether the currently connected network is a data network is detected, so that transmission of data associated with the payment operations is performed via a data network only if the network which the terminal is currently connected to is the data network. This can prevent unauthorized individuals from stealing user data via falsified WiFi, and thus property losses to users can be avoided. Consequently, safety of online payment can be further increased.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate examples consistent with the invention and, together with the description, serve to explain the principles of the invention.
Fig. 1 is a flowchart of a method for online payment according to an example.
Fig. 2 is a flowchart of a method for online payment according to an example.
Fig. 3 is block diagram of a device for online payment according to an example.
Fig. 4 is a block diagram of a device 400 for online payment according to an example.

### DETAILED DESCRIPTION

In order to make objectives, technical solutions and advantages of the present disclosure more clear, embodiments of the present disclosure will be described in further detail with reference to drawings.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

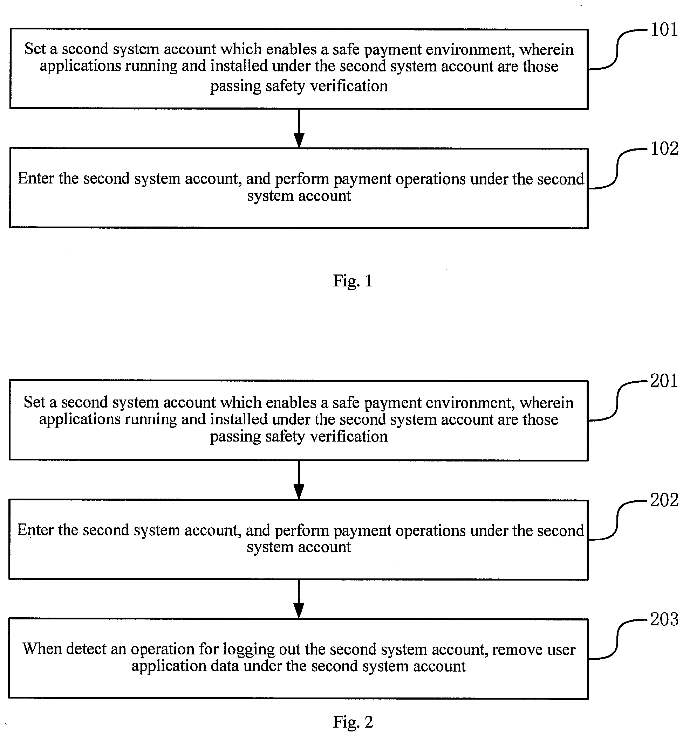

Fig. 1 is a flowchart of a method for online payment according to an example. As shown in Fig. 1, the method for online payment can be applied in a terminal, and can include the following steps.

In step 101, a second system account which enables a safe payment environment is set. Applications running and installed under the second system account are those passing safety verification.

In step 102, the second system account is entered, and payment operations are performed under the second system account.

In the method provided by the embodiment of the present disclosure, a second system account which enables a safe payment environment is set, applications running and installed under the second system account are those passing safety verification; the second system account is entered, and payment operations are performed under the second system account. That is, if online payment needs to be performed on a current terminal, the online payment has to be performed under the system managed by the second system account. Because the applications running and installed under the second system account are those passing safety verification, theft of user information by other application clients and thereby property losses to users can be avoided during the online payment.

The method further includes: when detecting an operation for logging out the second system account, removing user application data under the second system account.

The entering the second system account includes:
when detecting a payment operation, determining whether a current system account is the second system account; and if the current system account is not the second system account, switching to the second system account.

The performing the payment operations under the second system account includes: monitoring payment activities during the payment; if it is detected that there is data to be transmitted via a network during the payment, determining, by the terminal, whether the to-be-transmitted data is allowed to be transmitted by the network according to a safety verification; if the to-be-transmitted data is allowed to be transmitted by the network according to the safety verification, allowing, by the terminal, the to-be-transmitted data to be transmitted via the network and completing the payment operations; and if the to-be-transmitted data is prohibited from being accessed by the network according to the safety verification, discarding , by the terminal, the to-be-transmitted data.

The determining whether the to-be-transmitted data is allowed to be transmitted by the network according to the safety verification includes: determining whether the to-be-transmitted data comprises a unique identifier (UID) of the application client which is currently running and which is currently performing the payment, wherein UIDs of all application clients having the payment function and managed by the second system account are listed in a white list, by an IP information packet filtering system; if the to-be-transmitted data includes the UID, determining, by the terminal, that the to-be-transmitted data is allowed to be transmitted by the network according to the safety verification; and if the to-be-transmitted data does not include the UID, determining, by the terminal that the to-be-transmitted data is prohibited from being accessed by the network according to the safety verification.

In a non-claimed example, the entering the second system account includes: receiving a log-in request for logging into the second system account; and logging into the second system account.

In a possible implementation of the claimed embodiment, the method further includes: under the second system account, when receiving an installation request for installing an application, verifying whether a signature of the application is consistent with a signature of the application in an authorized application management system; if the signature of the application is consistent with the signature of the application in the authorized application management system, determining that installation of the application passes the safety verification, and installing the application under the second system account in response to the installation request; and if the signature of the application is not consistent with the signature of the application in the authorized application management system, rejecting the installation request.

In another possible implementation of the claimed embodiment, the method further includes: under the second system account, prohibiting all applications under the second system account from reading short messages.

In a non-claimed example, the prohibiting all applications under the second system account from reading short messages includes: restricting permissions for all of the applications to read the short messages by a system-provided permission management mechanism.

In still another possible implementation of the claimed embodiment, the performing payment operations under the second system account includes: under the second system account, transmitting data associated with the payment operations via a data network.

In still another possible implementation of the claimed embodiment, the transmitting data associated with the payment operations via the data network under the second system account includes: determining whether a currently connected network is the data network; if the currently connected network is the data network, transmitting the data associated with the payment operations via the data network; and if the current connected network is not the data network, displaying notification information to notify a user to connect to the data network, and transmitting the data associated with the payment operations via the data network after detecting that the current network is the data network.

Fig. 2 is a flowchart of a method for online payment according to an example. The method can be performed by a smart terminal such as a mobile phone. As shown in Fig. 2, the example includes the following steps.

In step 201, a second system account which enables a safe payment environment is set. Applications running and installed under the second system account are those passing safety verification.

For a smart terminal which supports a multiple-account mechanism, setting a second system account which enables a safe payment environment refers to setting any one of the multiple system accounts as the account which is used only for managing application clients having a payment function, so that online payment can be performed only under the system managed by the account. The multiple-account mechanism refers to that the smart terminal can use different system accounts to manage different systems. For example, a smart terminal which supports the multiple-account mechanism has three system accounts: USER 1, USER 2, and USER 3, among which, USER 1 is used to manage office application clients in the system, USER 2 is used to manage application clients having the payment function in the system, and USER 3 is used to manage application clients for entertainment. The account USER 2 can be set as a preset system account in the smart terminal for managing the application clients having the payment function.

In a possible implementation of the claimed embodiment, when an installation request for installing an application is received under the second system account, whether a signature of the application is consistent with a signature of the application in an authorized application management system is verified; if the signature of the application is consistent with the signature of the application in the authorized application management system, it is determined that installation of the application passes the safety verification, and the application is installed under the second system account in response to the installation request; if the signature of the application is not consistent with the signature of the application in the authorized application management system, the installation request is rejected. The authorized application management system is used to store identifications of application clients having a safe payment function and the signature corresponding to each of the application clients. The identification of each application client can be the name of the application client or the unique identifier (UID) of the application, or other information which can uniquely identify the application client, and embodiments of the present disclosure do not impose specific limitations on this. The signature of each application client is used to represent the uniqueness of the application client.

Checking whether the signature of the application client is consistent with a signature of the application client in a designated server can avoid situations where other unauthorized application clients obfuscate or replace already-installed reliable application clients to steal user data.

In step 202, the second system account is entered (in other words, the smart terminal gets into the second system account), and payment operations are performed under the second system account.

In a non-claimed example, the smart terminal can go into the second system account as follows: the smart terminal can receive a log-in request for logging into the second system account; and log into the second system account. The log-in request for logging into the second system account can be triggered by the following methods. For example, on a system switching interface, when a triggering operation on the account name of the second system account is detected, the log-in request for logging into the second system account is triggered. As another example, if the terminal has a touch screen, a designated gesture can be used to trigger the log-in request for logging into the second system account. Rather, other methods can be used to trigger the second system account and embodiments of the present disclosure do not impose specific limitations on this.

If the system under which the terminal is currently running is the second system account, when a payment operation is detected, the payment operation can be finished according to a payment process. If the system under which the terminal is currently running is not the second system account, the payment operation cannot be conducted. Thus, before the payment, it is needed to detect whether the system under which the terminal currently running is the second system account. To do this, the following steps can be performed in a possible implementation of the claimed embodiment:
when detecting a payment operation, determining whether a current system account is the second system account; and if the current system account is not the second system account, switching to the second system account. It should be noted that any one of the application clients is an application client having the payment function, and after a starting operation for any one application client is detected, it can be determined that a user wants to conduct payment online. The starting operation on the application client can be the user's tapping or touch operation or other types of triggering operation, and embodiments of the present disclosure do not impose specific limitations on this.

In a non-claimed example, if the system under which the terminal is currently running is not the second system account, before switching of the system to the second system account, notification information can be displayed on the screen of the terminal to notify the user to perform the switching operation. Options switching and options for not switching can be displayed, so that the user can determine by himself/herself to switch to the preset system account or not. Rather, other manners can be used to notify the user and embodiments of the present disclosure do not impose specific limitations on this. Whether to perform notification can be set by users by means of a system setting option so as to satisfy needs of different users.

By checking whether the current system account is the second system account to determine whether to perform the switching operation, if online payment needs to be performed on a current terminal, the online payment has to be performed under the system managed by the second system account. Because the applications running and installed under the second system account are those passing safety verification, theft of user information by other application clients and thereby property losses to users can be avoided during the online payment.

According to the claimed embodiment of the present disclosure, during the payment procedure, payment activities are monitored; if it is monitored that there is data transmitted via a network during the payment, whether the data is allowed to be transmitted by the network according to a safety verification is determined; if the data is allowed to be transmitted by the network according to the safety verification, the data is allowed to be transmitted via the network and the payment operations; if the data is prohibited from being accessed by the network according to the safety verification, the data is discarded. The network-based data transmission is included in the payment procedure, the procedure for the terminal to receive the data from the server and the procedure for the terminal to send data to the server. For example, before the online payment, the server sends verification information to the terminal, and the terminal sends information such as the amount to be paid, the account information of the person whom money is paid to and the user information registered in client currently used for the payment.

Specifically, the determining whether the data is allowed to be transmitted by the network according to the safety verification includes: according to a unique identifier (UID) of an application client corresponding to the transmitted data, detecting whether the data includes the UID; if the data includes the UID, determining that the data is allowed to be transmitted by the network according to the safety verification; and if the data does not include the UID, determining that the data is prohibited from being accessed by the network according to the safety verification. It should be noted that the determination of whether the data is allowed to be transmitted by the network according to the safety verification can be realized by other methods. For example, the determination can be performed by other data which can identify the uniqueness of corresponding application clients, and embodiments of the present disclosure do not impose specific limitations on the determination of whether the data is allowed to be transmitted by the network according to the safety verification.

The determination of whether the data includes the UID according to the UID of the application client corresponding to the transmitted data is realized as follows. By IP Tables (IP information packet filtering system), UIDs of all application clients having the payment function managed by the second system account are listed in a white list, including the UID of the application client which is currently running (i.e., the application client which is currently performing the online payment); each piece of transmitted data is detected, the data not including the UID of the application client that is currently running is determine as the data which is prohibited from being accessed by the network according to the safety verification, and the data including the UID of the application client that is currently running is determine as the data which is allowed to be transmitted by the network according to the safety verification.

In the claimed embodiment of the present disclosure, if the transmitted data does not include the UID and the transmitted data is determined as the data which is prohibited from being accessed by the network according to the safety verification, the data is discarded. In other words, only the application client which is currently used for the online payment has the network-access permission, and other application clients do not have the network-access permission. By the above methods, sending of unsafe data carrying user information to an unauthorized server can be avoided (which may result in leakage of user privacy), and thus the safety of the online payment can be further increased.

In still another possible implementation of the claimed embodiment of the present disclosure, under the second system account, all the applications are prohibited from reading short messages. Specifically, permissions for all of the applications to read the short messages are restricted by a system-provided permission management mechanism. The permission management mechanism is used to manage the permissions for application clients installed in the smart terminal, which permissions determine whether the application clients can use system functions.

The restricting permissions for all of the applications to read the short messages by the system-provided permission management mechanism can be implemented as follows: on a system permission setting interface under the second system account, identification information of all application clients are deleted from a list in which application clients having the permission to read short messages are listed.

Under the second system account, other methods can be used to prohibit all applications under the second system account from reading short messages, and embodiments of the present disclosure do not impose specific limitations on this.

During the online payment, servers may send verification codes to terminals by short messages. By prohibiting all applications managed by the second system account from reading contents of the short messages, theft of the verification codes in the short messages by unauthorized clients and thereby theft of user data can be avoided, and thus property loss to users can be avoided.

In still another possible implementation of the claimed embodiment of the present disclosure, under the second system account, data associated with the payment operations is transmitted via a data network. In still another possible implementation of the embodiment, whether a currently connected network is the data network is determined; if the currently connected network is the data network, the data associated with the payment operations is transmitted via the data network; and if the current connected network is not the data network, notification information is displayed to notify a user to connect to the data network, and the data associated with the payment operations is transmitted via the data network after detecting that the current network is the data network.

For example, detection of whether the currently connected network is the data network can be performed by detecting the Internet Protocol (IP) address of the smart terminal, or other methods, and embodiments of the present disclosure do not impose specific limitations on this.

By detecting whether the currently connected network is a data network, transmission of data associated with the payment operations is performed via a data network only if the network which the terminal is currently connected to is the data network. This can prevent unauthorized individuals from stealing user data via falsified WiFi, and thus property losses to users can be avoided. Consequently, safety of online payment can be increased.

In step 203, when an operation for logging out the second system account is detected, user application data under the second system account is removed or cleared.

The operation for logging out the second system account include at least operations for switching to other system account and shutting down, and other operation for logging out can be included and embodiments of the present disclosure do not impose specific limitations on this. During the period when the second system account is logged in, the application data generated by the application clients having the payment function includes at least data sent to corresponding servers during the online payment, data returned by the servers and information about log-in accounts, or other data, and embodiments of the present disclosure do not impose specific limitations on this.

Upon detection of logging-out of the second system account, application data generated by the application clients having the payment function during the period when the second system account is logged in is removed or cleared. This can reduce the probability of theft of user data and thereby increase the safety of online payment.

In the method provided by embodiments of the present disclosure, a second system account which enables a safe payment environment is set, applications running and installed under the second system account are those passing safety verification; the second system account is entered, and payment operations are performed under the second system account. That is, if online payment needs to be performed on a current terminal, the online payment has to be performed under the system managed by the second system account. Because the applications running and installed under the second system account are those passing safety verification, theft of user information by other application clients and thereby property losses to users can be avoided during the online payment. Further, whether the currently connected network is a data network may be detected, so that transmission of data associated with the payment operations is performed via a data network only if the network which the terminal is currently connected to is the data network. This can prevent unauthorized individuals from stealing user data via falsified WiFi, and thus property losses to users can be avoided. Consequently, safety of online payment can be increased.

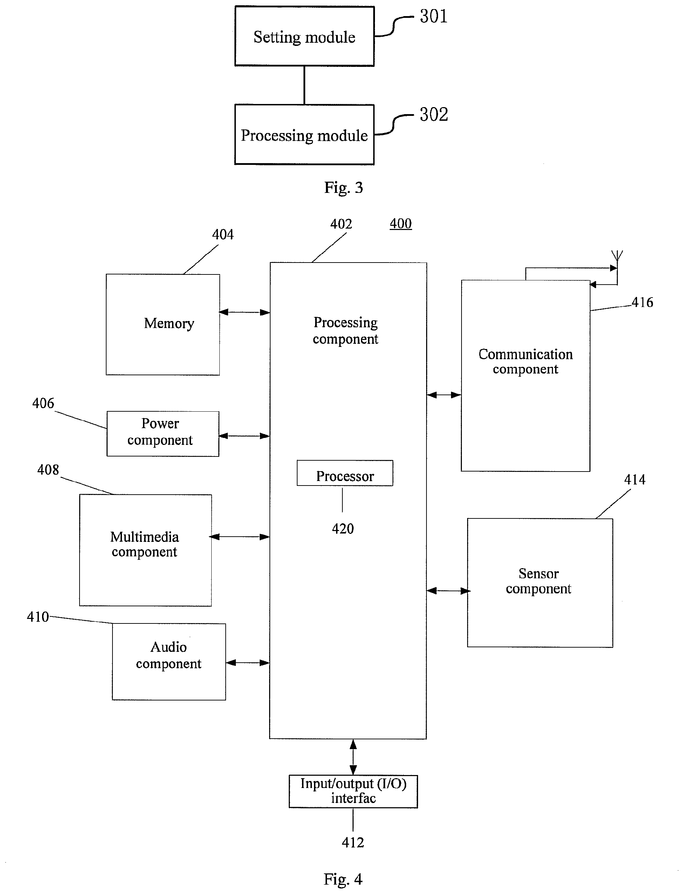

Fig. 3 is a block diagram of a device for online payment according to an example. Referring to Fig. 3, the device includes a setting module 301 and a processing module 302.

The setting module 301 is configured to set a second system account which enables a safe payment environment. Applications running and installed under the second system account are those passing safety verification.

The processing module 302 is configured to enter the second system account, and perform payment operations under the second system account.

In the claimed embodiment, the device further includes: a removing module configured to, when an operation for logging out the second system account is detected, remove user application data under the second system account.

In the claimed embodiment, the processing module 302 is configured to: when detect a payment operation, determine whether a current system account is the second system account; and if the current system account is not the second system account, switch to the second system account.

In the claimed embodiment, the processing module 302 is further configured to: monitor payment activities during the payment; if it is detected that there is data to be transmitted via a network during the payment, determine whether the to-be-transmitted data is allowed to be transmitted by the network according to a safety verification; if the to-be-transmitted data is allowed to be transmitted by the network according to the safety verification, allow the to-be-transmitted data to be transmitted via the network and complete the payment operations; and if the to-be-transmitted data is prohibited from being accessed by the network according to the safety verification, discard the to-be-transmitted data.

In the claimed embodiment, the processing module 302 is configured to: determine whether the to-be-transmitted data comprises a unique identifier (UID) of the application client which is currently running and which is currently performing the payment, wherein UIDs of all application clients having the payment function and managed by the second system account are listed in a white list, by an IP information packet filtering system; if the to-be-transmitted data includes the UID, determine that the to-be-transmitted data is allowed to be transmitted by the network according to the safety verification; and if the to-be-transmitted data does not include the UID, determine that the to-be-transmitted data is prohibited from being accessed by the network according to the safety verification.

In a non-claimed example, the processing module 302 is configured to: receive a log-in request for logging into the second system account; and log into the second system account.

In another claimed embodiment, the device further includes a verification module and an installation module.

The verification module is configured to: under the second system account, when an installation request for installing an application is received, verify whether a signature of the application is consistent with a signature of the application in an authorized application management system. The installation module is configured to: if the signature of the application is consistent with the signature of the application in the authorized application management system, determine that installation of the application passes the safety verification, and install the application under the second system account in response to the installation request. If the signature of the application is not consistent with the signature of the application in the authorized application management system, the processing module 302 rejects the installation request.

In still another claimed embodiment, the device further includes a permission setting module configured to: under the second system account, prohibit all applications under the second system account from reading short messages.

In a non-claimed example, the permission setting module is configured to restrict permissions for all of the applications to read the short messages by a system-provided permission management mechanism.

In still another claimed embodiment, the processing module 302 is configured to: under the second system account, transmit data associated with the payment operations via a data network.

In still another claimed embodiment, the processing module 302 is configured to: determine whether a currently connected network is the data network; if the currently connected network is the data network, transmit the data associated with the payment operations via the data network; and if the current connected network is not the data network, display notification information to notify a user to connect to the data network, and transmit the data associated with the payment operations via the data network after detecting that the current network is the data network.

With respect to the devices in the above embodiments, the specific manners for performing operations for individual modules therein have been described in detail in the embodiments regarding the methods, which will not be elaborated herein.

Fig. 4 is a block diagram of a device 400 for online payment according to an example. For example, the device 400 may be a mobile phone, a computer, a digital broadcast terminal, a messaging device, a gaming console, a tablet, a medical device, exercise equipment, a personal digital assistant, and the like.

Referring to Fig. 4, the device 400 includes a memory 404, and a processing component 402 including one or more processors 420 to execute instructions to perform all or part of the steps in the above described methods. The device 400 may further include one or more of the following components: a power component 406, a multimedia component 408, an audio component 410, an input/output (I/O) interface 412, a sensor component 414, and a communication component 416.

The processing component 402 typically controls overall operations of the device 400, such as the operations associated with display, telephone calls, data communications, camera operations, and recording operations. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, video, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a front camera and/or a rear camera. The front camera and the rear camera may receive an external multimedia datum while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone ("MIC") configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide status assessments of various aspects of the device 400. For instance, the sensor component 414 may detect an open/closed status of the device 400, relative positioning of components, e.g., the display and the keypad, of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an accelerometer sensor, a gyroscope sensor, a magnetic sensor, a pressure sensor, or a temperature sensor.

The communication component 416 is configured to facilitate communication, wired or wirelessly, between the device 400 and other devices. The device 400 can access a wireless network based on a communication standard, such as WiFi, 2G, or 3G, or a combination thereof. In one exemplary embodiment, the communication component 416 receives a broadcast signal or broadcast associated information from an external broadcast management system via a broadcast channel. In one exemplary embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In non-claimed examples, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for online payment.

In a claimed embodiment, there is also provided a non-transitory computer-readable storage medium including instructions, such as the memory 404 including instructions executable by the processor 420 in the device 400, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of a mobile terminal, causes the mobile terminal to perform above method for online payment.

## Claims

1. A method for online payment in a terminal which supports multiple system accounts, the method comprising:
setting one of said system accounts as a system account to be used only for managing application clients having a payment function, said system account being referred to as second system account;
setting (101, 201) the second system account, as a system account enabling a safe payment environment, wherein applications running and installed under the second system account are those passing safety verification; and
entering (102, 202) the second system account, and performing payment operations under the second system account;
**characterized in that**, the method further comprises:
when detecting an operation for logging out the second system account, removing (203) user application data under the second system account;
wherein the step of entering (102, 202) the second system account comprises:
when detecting a payment operation on any one of the application clients, determining whether a current system account is the second system account; and
if the current system account is not the second system account, switching to the second system account;
wherein performing the payment operations under the second system account comprises:
monitoring payment activities during the payment;
if it is detected that there is data to be transmitted via a network during the payment, determining, by the terminal, whether the to-be-transmitted data is allowed to be transmitted by the network according to a safety verification;
if the to-be-transmitted data is allowed to be transmitted by the network according to the safety verification, allowing, by the terminal, the to-be-transmitted data to be transmitted via the network and completing the payment operations; and
if the to-be-transmitted data is prohibited from being accessed by the network according to the safety verification, discarding, by the terminal, the to-be-transmitted data;
and
wherein determining whether the to-be-transmitted data is allowed to be transmitted by the network according to the safety verification comprises:
determining whether the to-be-transmitted data comprises a unique identifier, UID, of the application client which is currently running and which is currently performing the payment, wherein UIDs of all application clients having the payment function and managed by the second system account are listed in a white list, by an IP information packet filtering system;
if the to-be-transmitted data comprises the UID, determining, by the terminal, that the to-be-transmitted data is allowed to be transmitted by the network according to the safety verification; and
if the to-be-transmitted data does not comprise the UID, determining, by the terminal, that the to-be-transmitted data is prohibited from being accessed by the network according to the safety verification.

2. The method according to claim 1, further comprising:
under the second system account, when receiving an installation request for installing an application, verifying whether a signature of the application is consistent with a signature of the application in an authorized application management system;
if the signature of the application is consistent with the signature of the application in the authorized application management system, determining that installation of the application passes the safety verification, and installing the application under the second system account in response to the installation request; and
if the signature of the application is not consistent with the signature of the application in the authorized application management system, rejecting the installation request.

3. The method according to claim 1 or 2, further comprising:
under the second system account, prohibiting all applications under the second system account from reading short messages.

4. The method according to any one of claims 1 to 3, wherein the step of performing payment operations under the second system account comprises:
under the second system account, transmitting data associated with the payment operations via a data network.

5. The method according to claim 4, wherein the step of transmitting data associated with the payment operations via the data network under the second system account comprises:
determining whether a currently connected network is the data network;
if the currently connected network is the data network, transmitting the data associated with the payment operations via the data network; and
if the current connected network is not the data network, displaying notification information to notify a user to connect to the data network, and transmitting the data associated with the payment operations via the data network after detecting that the current network is the data network.

6. A device for online payment, said device supporting multiple system accounts and comprising:
a setting module (301) configured to set one of said system accounts as a system account to be used only for managing application clients having a payment function, said system account being referred to as second system account,
the setting module being configured to set the second system account as a system account enabling a safe payment environment, wherein applications running and installed under the second system account are those passing safety verification; and
a processing module (302) configured to enter the second system account, and perform payment operations under the second system account;
**characterized in that**, the device further comprises:
a removing module configured to, when an operation for logging out the second system account is detected, remove user application data under the second system account;
wherein the processing module (302) is configured to:
when detecting a payment operation on any one of the application clients, determine whether a current system account is the second system account; and
if the current system account is not the second system account, switch to the second system account,
wherein the processing module (302) is further configured to:
monitor payment activities during the payment;
if it is detected that there is data to be transmitted via a network during the payment, determine whether the to-be-transmitted data is allowed to be transmitted by the network according to a safety verification;
if the to-be-transmitted data is allowed to be transmitted by the network according to the safety verification, allow the to-be-transmitted data to be transmitted via the network and complete the payment operations; and
if the to-be-transmitted data is prohibited from being accessed by the network according to the safety verification, discard the to-be-transmitted data; and
wherein the processing module (302) is further configured to:
determine whether the to-be-transmitted data comprises a unique identifier, UID, of the application client which is currently running and which is currently performing the payment, wherein UIDs of all application clients having the payment function and managed by the second system account are listed in a white list, by an IP information packet filtering system;
if the to-be-transmitted data comprises the UID, determine that the to-be-transmitted data is allowed to be transmitted by the network according to the safety verification; and
if the to-be-transmitted data does not comprise the UID, determine that the to-be-transmitted data is prohibited from being accessed by the network according to the safety verification.

7. The device according to claim 6, further comprising:
a verification module configured to, under the second system account, when an installation request for installing an application is received, verify whether a signature of the application is consistent with a signature of the application in an authorized application management system; and
an installation module configured to, if the signature of the application is consistent with the signature of the application in the authorized application management system, determine that installation of the application passes the safety verification, and install the application under the second system account in response to the installation request;
wherein if the signature of the application is not consistent with the signature of the application in the authorized application management system, the processing module rejects the installation request.

8. The device according to claim 6, further comprising:
a permission setting module configured to, under the second system account, prohibit all applications under the second system account from reading short messages.

9. The device according to claim 6, wherein the processing module (302) is configured to:
under the second system account, transmit data associated with the payment operations via a data network.

10. The device for online payment according to claim 9, wherein the processing module (302) is further configured to:
determine whether a currently connected network is the data network;
if the currently connected network is the data network, transmit the data associated with the payment operations via the data network; and
if the current connected network is not the data network, display notification information to notify a user to connect to the data network, and transmit the data associated with the payment operations via the data network after detecting that the current network is the data network.

11. A device for online payment, said device supporting multiple system accounts and comprising:
a processor; and
a memory storing instructions which, when executed by the processor, causes the processor to perform the method according to any one of the claims 1-5.

12. A non-transitory computer-readable storage medium storing instructions which, when executed by a processor of a device for online payment, causes the processor to perform the method according to any one of the claims 1-5.

## Patentansprüche

1. Verfahren zur Online-Zahlung in einem Endgerät, das mehrere Systemkonten unterstützt, wobei das Verfahren umfasst:
Festlegen eines der Systemkonten als Systemkonto, das nur für die Verwaltung von Anwendungsclients mit einer Zahlungsfunktion verwendet wird, wobei dieses Systemkonto als zweites Systemkonto bezeichnet wird,
Einstellen (101, 201) des zweiten Systemkontos als ein Systemkonto, das eine sichere Zahlungsumgebung ermöglicht, wobei die unter dem zweiten Systemkonto laufenden und installierten Anwendungen diejenigen sind, die eine Sicherheitsüberprüfung bestehen, und
Eintreten (102, 202) in das zweite Systemkonto und Durchführen von Zahlungsvorgängen unter dem zweiten Systemkonto,
**dadurch gekennzeichnet, dass** das Verfahren ferner umfasst:
beim Erkennen einer Operation zum Abmelden des zweiten Systemkontos, Entfernen (203) von Benutzeranwendungsdaten unter dem zweiten Systemkonto,
wobei der Schritt des Eintretens (102, 202) in das zweite Systemkonto umfasst:
beim Erkennen eines Zahlungsvorgangs auf einem der Anwendungsclients, Bestimmen, ob ein aktuelles Systemkonto das zweite Systemkonto ist, und
wenn das aktuelle Systemkonto nicht das zweite Systemkonto ist, Wechseln zum zweiten Systemkonto,
wobei das Durchführen der Zahlungsvorgänge unter dem zweiten Systemkonto umfasst:
Überwachen von Zahlungsaktivitäten während der Zahlung,
wenn festgestellt wird, dass während der Zahlung Daten über ein Netz zu übertragen sind, Bestimmen durch das Endgerät, ob die zu übertragenden Daten gemäß einer Sicherheitsüberprüfung über das Netz übertragen werden dürfen,
wenn die zu übertragenden Daten gemäß der Sicherheitsüberprüfung über das Netz übertragen werden dürfen, Zulassen der Übertragung der zu übertragenden Daten durch das Endgerät über das Netz und Abschließen der Zahlungsvorgänge, und
wenn der Zugriff auf die zu übertragenden Daten durch das Netz gemäß der Sicherheitsüberprüfung verboten ist, Verwerfen der zu übertragenden Daten durch das Endgerät,
und
wobei das Bestimmen, ob die zu übertragenden Daten über das Netz gemäß der Sicherheitsüberprüfung übertragen werden dürfen, umfasst:
Bestimmen, ob die zu übertragenden Daten einen eindeutigen Bezeichner, UID, des Anwendungs-Clients umfassen, der gerade läuft und gerade die Zahlung durchführt, wobei UIDs aller Anwendungsclients, die die Zahlungsfunktion haben und von dem zweiten Systemkonto verwaltet werden, in einer weißen Liste durch ein IP-Informationspaket-Filtersystem aufgeführt sind,
wenn die zu übertragenden Daten den UID enthalten, Bestimmen durch das Endgerät, dass die zu übertragenden Daten gemäß der Sicherheitsüberprüfung über das Netz übertragen werden dürfen, und
wenn die zu übertragenden Daten den UID nicht enthalten, Bestimmen durch das Endgerät, dass der Zugriff auf die zu übertragenden Daten durch das Netz gemäß der Sicherheitsüberprüfung verboten ist.

2. Verfahren nach Anspruch 1, ferner umfassend:
Überprüfen, unter dem zweiten Systemkonto beim Empfang einer Installationsanforderung für die Installation einer Anwendung, ob eine Signatur der Anwendung mit einer Signatur der Anwendung in einem autorisierten Anwendungsverwaltungssystem übereinstimmt,
wenn die Signatur der Anwendung mit der Signatur der Anwendung in dem autorisierten Anwendungsverwaltungssystem übereinstimmt, Feststellen, dass die Installation der Anwendung die Sicherheitsüberprüfung besteht, und Installieren der Anwendung unter dem zweiten Systemkonto als Reaktion auf die Installationsanforderung, und
wenn die Signatur der Anwendung nicht mit der Signatur der Anwendung im autorisierten Anwendungsverwaltungssystem übereinstimmt, Ablehnen der Installationsaufforderung.

3. Verfahren nach Anspruch 1 oder 2, ferner umfassend:
Verhindern, unter dem zweiten Systemkonto, dass alle Anwendungen unter dem zweiten Systemkonto Kurznachrichten lesen können.

4. Verfahren nach einem der Ansprüche 1 bis 3, wobei der Schritt des Durchführens von Zahlungsvorgängen unter dem zweiten Systemkonto umfasst:
Übertragen, unter dem zweiten Systemkonto, von mit den Zahlungsvorgängen verbundenen Daten über ein Datennetz.

5. Verfahren nach Anspruch 4, wobei der Schritt des Übertragens von mit den Zahlungsvorgängen verbundenen Daten über das Datennetz unter dem zweiten Systemkonto umfasst:
Feststellen, ob es sich bei einem aktuell verbundenen Netz um das Datennetz handelt,
wenn es sich bei dem aktuell verbundenen Netz um das Datennetz handelt, Übertragen der mit den Zahlungsvorgängen verbundenen Daten über das Datennetz, und
wenn das aktuell verbundene Netz nicht das Datennetz ist, Anzeigen von Benachrichtigungsinformationen, um einen Benutzer zu benachrichtigen, sich mit dem Datennetz zu verbinden, und Übertragen der mit den Zahlungsvorgängen verbundenen Daten über das Datennetz, nachdem festgestellt wurde, dass das aktuelle Netz das Datennetz ist.

6. Vorrichtung für Online-Zahlungen, wobei die Vorrichtung mehrere Systemkonten unterstützt und umfasst:
ein Einstellmodul (301), das dazu konfiguriert ist, eines der Systemkonten als ein Systemkonto einzustellen, das nur für die Verwaltung von Anwendungsclients mit einer Zahlungsfunktion verwendet wird, wobei das Systemkonto als zweites Systemkonto bezeichnet wird,
das Einstellmodul dazu konfiguriert ist, das zweite Systemkonto als ein Systemkonto einzustellen, das eine sichere Zahlungsumgebung ermöglicht, wobei die unter dem zweiten Systemkonto laufenden und installierten Anwendungen diejenigen sind, die eine Sicherheitsüberprüfung bestehen, und
ein Verarbeitungsmodul (302), das dazu konfiguriert ist, in das zweite Systemkonto einzutreten und Zahlungsvorgänge unter dem zweiten Systemkonto durchzuführen,
**dadurch gekennzeichnet, dass** die Vorrichtung ferner umfasst:
ein Entfernungsmodul, das dazu konfiguriert ist, wenn ein Vorgang zum Abmelden des zweiten Systemkontos erkannt wird, Benutzeranwendungsdaten unter dem zweiten Systemkonto zu entfernen,
wobei das Verarbeitungsmodul (302) dazu konfiguriert ist:
beim Erkennen eines Zahlungsvorgangs auf einem der Anwendungsclients festzustellen, ob ein aktuelles Systemkonto das zweite Systemkonto ist, und
wenn das aktuelle Systemkonto nicht das zweite Systemkonto ist, zum zweiten Systemkonto zu wechseln,
wobei das Verarbeitungsmodul (302) ferner dazu konfiguriert ist:
Zahlungsaktivitäten während der Zahlung zu überwachen,
wenn festgestellt wird, dass während der Zahlung Daten über ein Netz zu übertragen sind, zu bestimmen, ob die zu übertragenden Daten gemäß einer Sicherheitsüberprüfung über das Netz übertragen werden dürfen,
wenn die zu übertragenden Daten gemäß der Sicherheitsüberprüfung über das Netz übertragen werden dürfen, zu erlauben, dass die zu übertragenden Daten über das Netz übertragen werden, und die Zahlungsvorgänge abzuschließen, und
wenn der Zugriff auf die zu übertragenden Daten über das Netz gemäß der Sicherheitsüberprüfung verboten ist, die zu übertragenden Daten zu verwerfen, und
wobei das Verarbeitungsmodul (302) ferner dazu konfiguriert ist:
zu bestimmen, ob die zu übertragenden Daten einen eindeutigen Bezeichner, UID, des Anwendungsclients umfassen, der gerade läuft und der gerade die Zahlung durchführt, wobei UIDs aller Anwendungsclients, die eine Zahlungsfunktion haben und von dem zweiten Systemkonto verwaltet werden, in einer weißen Liste von einem IP-Informationspaket-Filtersystem aufgeführt werden,
wenn die zu übertragenden Daten den UID enthalten, zu bestimmen, dass die zu übertragenden Daten gemäß der Sicherheitsüberprüfung über das Netz übertragen werden dürfen, und
wenn die zu übertragenden Daten den UID nicht enthalten, zu bestimmen, dass der Zugriff auf die zu übertragenden Daten durch das Netz gemäß der Sicherheitsüberprüfung verboten ist.

7. Vorrichtung nach Anspruch 6, ferner umfassend:
ein Verifizierungsmodul, das dazu konfiguriert ist, unter dem zweiten Systemkonto, wenn eine Installationsanforderung zum Installieren einer Anwendung empfangen wird, zu verifizieren, ob eine Signatur der Anwendung mit einer Signatur der Anwendung in einem autorisierten Anwendungsverwaltungssystem übereinstimmt, und
ein Installationsmodul, das dazu konfiguriert ist, wenn die Signatur der Anwendung mit der Signatur der Anwendung in dem autorisierten Anwendungsverwaltungssystem übereinstimmt, festzustellen, dass die Installation der Anwendung die Sicherheitsüberprüfung besteht, und die Anwendung als Reaktion auf die Installationsanforderung unter dem zweiten Systemkonto zu installieren,
wobei, wenn die Signatur der Anwendung nicht mit der Signatur der Anwendung im autorisierten Anwendungsverwaltungssystem übereinstimmt, das Verarbeitungsmodul die Installationsanforderung zurückweist.

8. Vorrichtung nach Anspruch 6, ferner umfassend:
ein Berechtigungseinstellmodul, das dazu konfiguriert ist, unter dem zweiten Systemkonto allen Anwendungen unter dem zweiten Systemkonto das Lesen von Kurznachrichten zu untersagen.

9. Vorrichtung nach Anspruch 6, wobei das Verarbeitungsmodul (302) dazu konfiguriert ist:
unter dem zweiten Systemkonto die mit den Zahlungsvorgängen verbundenen Daten über ein Datennetz zu übertragen.

10. Vorrichtung für Online-Zahlungen nach Anspruch 9, wobei das Verarbeitungsmodul (302) ferner dazu konfiguriert ist:
festzustellen, ob ein aktuell verbundenes Netz das Datennetz ist,
wenn das aktuell verbundene Netz das Datennetz ist, die mit den Zahlungsvorgängen verbundenen Daten über das Datennetz zu übertragen, und
wenn das aktuell verbundene Netz nicht das Datennetz ist, Benachrichtigungsinformationen anzuzeigen, um einen Benutzer zu benachrichtigen, sich mit dem Datennetz zu verbinden, und die mit den Zahlungsvorgängen verbundenen Daten über das Datennetz zu übertragen, nachdem festgestellt wurde, dass das aktuelle Netz das Datennetz ist.

11. Vorrichtung für Online-Zahlungen, wobei die Vorrichtung mehrere Systemkonten unterstützt und umfasst:
einen Prozessor und
einen Speicher, der Befehle speichert, die, wenn sie von dem Prozessor ausgeführt werden, den Prozessor veranlassen, das Verfahren nach einem der Ansprüche 1 - 5 durchzuführen.

12. Nicht-transitorisches computerlesbares Speichermedium, das Befehle speichert, die, wenn sie von einem Prozessor einer Vorrichtung für Online-Zahlungen ausgeführt werden, den Prozessor veranlassen, das Verfahren nach einem der Ansprüche 1 - 5 durchzuführen.

## Revendications

1. Procédé de paiement en ligne dans un terminal qui prend en charge plusieurs comptes système, le procédé comprenant les étapes suivantes :
définir l'un desdits comptes système comme un compte système à utiliser uniquement pour gérer des applications client ayant une fonction de paiement, ledit compte système étant appelé deuxième compte système ;
définir (101, 201) le deuxième compte système comme un compte système assurant un environnement de paiement sécurisé, dans lequel les applications qui s'exécutent et qui sont installées sous le deuxième compte système sont celles qui réussissent une vérification de sécurité ; et
entrer (102, 202) dans le deuxième compte système et réaliser des opérations de paiement sous le deuxième compte système ;
**caractérisé en ce que** le procédé comprend en outre l'étape suivante :
lors de la détection d'une opération de déconnexion du deuxième compte système, supprimer (203) des données d'application d'utilisateur sous le deuxième compte système ;
dans lequel l'étape consistant à entrer (102, 202) dans le deuxième compte système comprend les étapes suivantes :
lors de la détection d'une opération de paiement sur l'une quelconque des applications client, déterminer si un compte système courant est le deuxième compte système ; et
si le compte système courant n'est pas le deuxième compte système, passer au deuxième compte système ;
dans lequel la réalisation des opérations de paiement sous le deuxième compte système comprend les étapes suivantes :
surveiller les activités de paiement pendant le payement ;
s'il est détecté qu'il y a des données à transmettre via un réseau pendant le payement, déterminer par le terminal si la transmission des données à transmettre est autorisée par le réseau selon une vérification de sécurité ;
si la transmission des données à transmettre est autorisée par le réseau selon la vérification de sécurité, autoriser par le terminal la transmission des données à transmettre via le réseau et achever les opérations de paiement ; et
si l'accès aux données à transmettre est interdit par le réseau selon la vérification de sécurité, écarter par le terminal les données à transmettre ;
et
dans lequel le fait de déterminer si la transmission des données à transmettre est autorisée par le réseau selon la vérification de sécurité comprend les étapes suivantes :
déterminer si les données à transmettre comprennent un identifiant unique, UID, de l'application client qui est en cours d'exécution et qui réalise actuellement le payement, dans lequel les UID de toutes les applications client ayant la fonction de paiement et gérées par le deuxième compte système sont répertoriés dans une liste blanche par un système de filtrage de paquets d'informations IP ;
si les données à transmettre comprennent l'UID, déterminer par le terminal que la transmission des données à transmettre est autorisée par le réseau selon la vérification de sécurité ; et
si les données à transmettre ne comprennent pas l'UID, déterminer par le terminal que l'accès aux données à transmettre est interdit par le réseau selon la vérification de sécurité.

2. Procédé selon la revendication 1, comprenant en outre les étapes suivantes :
sous le deuxième compte système, lors de la réception d'une demande d'installation pour installer une application, vérifier si une signature de l'application est cohérente avec une signature de l'application dans un système de gestion d'applications autorisé ;
si la signature de l'application est cohérente avec la signature de l'application dans le système de gestion d'applications autorisé, déterminer que l'installation de l'application a réussi la vérification de sécurité et installer l'application sous le deuxième compte système en réponse à la demande d'installation ; et
si la signature de l'application n'est pas cohérente avec la signature de l'application dans le système de gestion d'applications autorisé, rejeter la demande d'installation.

3. Procédé selon la revendication 1 ou 2, comprenant en outre l'étape suivante :
sous le deuxième compte système, interdire à toutes les applications sous le deuxième compte système de lire les messages courts.

4. Procédé selon l'une quelconque des revendications 1 à 3, dans lequel l'étape consistant à réaliser des opérations de paiement sous le deuxième compte système comprend l'étape suivante :
sous le deuxième compte système, transmettre des données associées aux opérations de paiement via un réseau de données.

5. Procédé selon la revendication 4, dans lequel l'étape consistant à transmettre des données associées aux opérations de paiement via le réseau de données sous le deuxième compte système comprend les étapes suivantes :
déterminer si un réseau connecté actuellement est le réseau de données ;
si le réseau connecté actuellement est le réseau de données, transmettre les données associées aux opérations de paiement via le réseau de données ; et
si le réseau connecté actuel n'est pas le réseau de données, afficher des informations de notification pour notifier à un utilisateur de se connecter au réseau de données, et transmettre les données associées aux opérations de paiement via le réseau de données après avoir détecté que le réseau actuel est le réseau de données.

6. Dispositif de paiement en ligne, ledit dispositif prenant en charge plusieurs comptes système et comprenant :
un module de définition (301) configuré pour définir l'un desdits comptes système comme un compte système à utiliser uniquement pour gérer des applications client ayant une fonction de paiement, ledit compte système étant appelé deuxième compte système,
le module de définition étant configuré pour définir le deuxième compte système comme un compte système assurant un environnement de paiement sécurisé, dans lequel les applications qui s'exécutent et qui sont installées sous le deuxième compte système sont celles qui réussissent une vérification de sécurité ; et
un module de traitement (302) configuré pour entrer dans le deuxième compte système et réaliser des opérations de paiement sous le deuxième compte système ;
**caractérisé en ce que** le dispositif comprend en outre :
un module de suppression configuré pour, lorsqu'une opération de déconnexion du deuxième compte système est détectée, supprimer des données d'application d'utilisateur sous le deuxième compte système ;
dans lequel le module de traitement (302) est configuré pour :
lors de la détection d'une opération de paiement sur l'une quelconque des applications client, déterminer si un compte système courant est le deuxième compte système ; et
si le compte système courant n'est pas le deuxième compte système, passer au deuxième compte système,
dans lequel le module de traitement (302) est en outre configuré pour :
surveiller les activités de paiement pendant le payement ;
s'il est détecté qu'il y a des données à transmettre via un réseau pendant le payement, déterminer si la transmission des données à transmettre est autorisée par le réseau selon une vérification de sécurité ;
si la transmission des données à transmettre est autorisée par le réseau selon la vérification de sécurité, autoriser la transmission des données à transmettre via le réseau et achever les opérations de paiement ; et
si l'accès aux données à transmettre est interdit par le réseau selon la vérification de sécurité, écarter les données à transmettre ; et
dans lequel le module de traitement (302) est en outre configuré pour :
déterminer si les données à transmettre comprennent un identifiant unique, UID, de l'application client qui est en cours d'exécution et qui réalise actuellement le payement, dans lequel les UID de toutes les applications client ayant la fonction de paiement et gérées par le deuxième compte système sont répertoriés dans une liste blanche par un système de filtrage de paquets d'informations IP ;
si les données à transmettre comprennent l'UID, déterminer que la transmission des données à transmettre est autorisée par le réseau selon la vérification de sécurité ; et
si les données à transmettre ne comprennent pas l'UID, déterminer que l'accès aux données à transmettre est interdit par le réseau selon la vérification de sécurité.

7. Dispositif selon la revendication 6, comprenant en outre :
un module de vérification configuré pour, sous le deuxième compte système, lorsqu'une demande d'installation pour installer une application est reçue, vérifier si une signature de l'application est cohérente avec une signature de l'application dans un système de gestion d'applications autorisé ; et
un module d'installation configuré pour, si la signature de l'application est cohérente avec la signature de l'application dans le système de gestion d'applications autorisé, déterminer que l'installation de l'application a réussi la vérification de sécurité, et installer l'application sous le deuxième compte système en réponse à la demande d'installation ;
dans lequel si la signature de l'application n'est pas cohérente avec la signature de l'application dans le système de gestion d'applications autorisé, le module de traitement rejette la demande d'installation.

8. Dispositif selon la revendication 6, comprenant en outre :
un module de définition de permission configuré pour, sous le deuxième compte système, interdire à toutes les applications sous le deuxième compte système de lire les messages courts.

9. Dispositif selon la revendication 6, dans lequel le module de traitement (302) est configuré pour :
sous le deuxième compte système, transmettre des données associées aux opérations de paiement via un réseau de données.

10. Dispositif de paiement en ligne selon la revendication 9, dans lequel le module de traitement (302) est en outre configuré pour :
déterminer si un réseau connecté actuellement est le réseau de données ;
si le réseau connecté actuellement est le réseau de données, transmettre les données associées aux opérations de paiement via le réseau de données ; et
si le réseau connecté actuel n'est pas le réseau de données, afficher des informations de notification pour notifier à un utilisateur de se connecter au réseau de données, et transmettre les données associées aux opérations de paiement via le réseau de données après avoir détecté que le réseau actuel est le réseau de données.

11. Dispositif de paiement en ligne, ledit dispositif prenant en charge plusieurs comptes système et comprenant :
un processeur ; et
une mémoire stockant des instructions qui, lorsqu'elles sont exécutées par le processeur, amènent le processeur à réaliser le procédé selon l'une quelconque des revendications 1 à 5.

12. Support de stockage non transitoire lisible par ordinateur stockant des instructions qui, lorsqu'elles sont exécutées par un processeur d'un dispositif de paiement en ligne, amènent le processeur à réaliser le procédé selon l'une quelconque des revendications 1 à 5.
